(19) **Europäisches Patentamt**

**European Patent Office**

**Office européen des brevets**

(11) **EP 1 139 190 B1**

(12) **FASCICULE DE BREVET EUROPEEN**

(45) Date de publication et mention de la délivrance du brevet:
**16.11.2005 Bulletin 2005/46**

(51) Int Cl.⁷: $G05D\ 1/00$, $B64D\ 31/10$

(21) Numéro de dépôt: **01400578.9**

(22) Date de dépôt: **06.03.2001**

(54) **Procédé pour déterminer une vitesse minimale de contrôle d'un aéronef.**

Verfahren zur Bestimmung einer Minimalsteuergeschwindigkeit eines Flugzeugs

Aircraft minimum control speed determination method

(84) Etats contractants désignés:
**DE ES GB IT**

(30) Priorité: **23.03.2000 FR 0003719**

(43) Date de publication de la demande:
**04.10.2001 Bulletin 2001/40**

(73) Titulaire: **AIRBUS France**
**31060 Toulouse (FR)**

(72) Inventeur: **Burson, David**
**31500 Toulouse (FR)**

(74) Mandataire: **Bonnetat, Christian**
**CABINET BONNETAT**
**29, rue de St. Pétersbourg**
**75008 Paris (FR)**

(56) Documents cités:
**US-A- 4 638 437**     **US-A- 5 927 655**

- **LATIMER K ET AL: "C-17 engine-out compensation system testing" 1999 IEEE AEROSPACE CONFERENCE. PROCEEDINGS (CAT. NO.99TH8403), vol. 3, 6 - 13 mars 1999, pages 43-51, XP000972646 PISCATAWAY USA ISBN: 0-7803-5425-7**

## Description

La présente invention concerne un procédé pour déterminer sur un aéronef pourvu d'une pluralité de moteurs une vitesse minimale de contrôle avec au moins un moteur coupé.

Dans le cadre de la présente invention, on entend par vitesse minimale de contrôle, la vitesse minimale à laquelle il est possible de maintenir l'aéronef, par exemple un avion de transport civil, à un cap constant avec simultanément :

- au moins un moteur qui est coupé, par exemple un moteur en panne ou un moteur volontairement coupé ;
- la gouverne de direction qui est en butée ; et
- une inclinaison latérale de l'aéronef, qui est inférieure ou égale à cinq degrés.

On sait que les vitesses minimales de contrôle VMC peuvent induire sur l'aéronef des limitations notamment sur les vitesses caractéristiques admissibles au décollage et donc sur les performances dudit aéronef. En effet, pour des raisons de sécurité, il est nécessaire en particulier :

- que la vitesse Vr de rotation au décollage soit supérieure ou égale à 1,05.VMCA, la vitesse VMCA étant la vitesse minimale de contrôle au décollage ;
- que la vitesse minimale V2 au deuxième segment soit supérieure ou égale à 1,1.VMCA ; et
- que la vitesse minimale Vref à l'approche soit supérieure ou égale à VMCL, la vitesse VMCL étant la vitesse minimale de contrôle à l'approche.

Bien entendu, une vitesse minimale de contrôle est caractéristique du type d'aéronef considéré. Par conséquent, pour garantir la sécurité exigée, sans pour autant se pénaliser en prenant des marges trop importantes par rapport à sa valeur effective, il est nécessaire de déterminer le plus précisément possible cette vitesse minimale de contrôle.

On connaît un procédé permettant de déterminer sur un aéronef pourvu d'une pluralité de moteurs, la vitesse minimale de contrôle avec au moins un moteur coupé. Selon ce procédé connu :

a) au cours d'une pluralité de vols (dits vols d'essai) dudit aéronef, on mesure sur ledit aéronef les valeurs du dérapage $\beta$, de la force latérale Cy et du moment de lacet Cnf;

b) à partir desdites mesures et d'au moins une valeur de certification prédéfinie, on détermine une valeur de certification Cnfcertif du moment de lacet cnf créé par la coupure du moteur ;

c) à partir de ladite valeur de certification Cnfcertif, on calcule la valeur d'un paramètre K permettant de former une relation :

$$\Delta fn = K.Vc^2,$$

dans laquelle :

- $\Delta fn$ illustre la dissymétrie de poussée due à la coupure du moteur ; et
- Vc représente la vitesse de l'aéronef ; et

d) à partir de ladite relation et de courbes de poussée des moteurs, on détermine ladite vitesse minimale de contrôle.

De plus, selon ce procédé connu, pour faire les mesures sur l'aéronef, on amène la gouverne de direction en butée. La valeur de l'angle de braquage $\delta n$ de la gouverne de direction étant alors connue, on met en oeuvre l'étape b) précitée, en résolvant un modèle linéaire du comportement de l'aéronef.

A cet effet, on connaît deux modèles différents, qui s'écrivent respectivement :

* $\frac{Ny.Cz}{\delta n} = A.\frac{Cnf}{\delta n} + B$

* $\sin\Phi.Cz = A.Cnf + B$

Dans ces modèles :

- Ny est l'accélération latérale ;
- Cz est le coefficient de portance ;
- Cnf est le moment de lacet créé par la coupure du moteur ;
- Φ est l'angle de roulis ; et
- A et B sont deux coefficients déterminés au moyen d'une droite de régression linéaire sur les valeurs mesurées.

Ce procédé connu présente plusieurs inconvénients. En particulier :

- il n'est pas très précis ;
- en raison de la dispersion des mesures et de la difficulté d'obtenir des points parfaitement stabilisés, la qualité de ladite régression linéaire est réduite. Aussi une pluralité de vols d'essai est nécessaire, pour obtenir à partir des mesures réalisées un nombre suffisant de points pour permettre une sélection appropriée desdits points, ceci dans le but d'obtenir une qualité suffisante de la régression linéaire ; et
- la fiabilité de ce procédé connu est réduite. En effet, en raison de la qualité réduite de la régression linéaire, on obtient parfois, lors de différentes mises en oeuvre dudit procédé connu, des vitesses minimales de contrôle différentes pour un même aéronef.

La présente invention a pour objet de remédier à ces inconvénients. Elle concerne un procédé fiable et efficace pour déterminer sur un aéronef pourvu d'une pluralité de moteurs, la vitesse minimale de contrôle avec au moins un moteur coupé, soit volontairement par un pilote, soit suite à une panne.

A cet effet, ledit procédé selon lequel :

a) au cours au moins d'un vol dudit aéronef, on mesure sur ledit aéronef les valeurs du dérapage β, de la force latérale Cy et du moment de lacet Cnf;

b) à partir desdites mesures et d'au moins une valeur de certification prédéfinie, on détermine une valeur de certification Cnfcertif du moment de lacet cnf créé par la coupure du moteur ;

c) à partir de ladite valeur de certification Cnfcertif, on calcule la valeur d'un paramètre K permettant de former une première relation :

$$\Delta fn = K.Vc^2,$$

dans laquelle :

- $\Delta fn$ illustre la dissymétrie de poussée due à la coupure du moteur ; et
- Vc représente la vitesse de l'aéronef ; et

d) à partir de ladite première relation et de courbes de poussée des moteurs, on détermine ladite vitesse minimale de contrôle,

est remarquable, selon l'invention, en ce que

- a ladite étape b) :

b1) à partir de valeurs mesurées simultanément, respectivement du dérapage β et de la force latérale Cy, on déduit une deuxième relation entre ledit dérapage β et ladite force latérale Cy ;

b2) à partir de ladite deuxième relation et d'une valeur de certification Cycertif de ladite force latérale Cy, on détermine une valeur de certification βcertif correspondante du dérapage β ;

b3) à partir des valeurs mesurées simultanément, respectivement dudit dérapage β, de ladite force latérale Cy et dudit moment de lacet Cnf, on déduit une troisième relation entre ledit dérapage β, ladite force latérale Cy et ledit moment de lacet Cnf ; et

b4) à partir de ladite troisième relation et desdites valeurs de certification Cycertif et βcertif, on détermine ladite valeur de certification Cnfcertif;

- et à l'étape c) on calcule le paramètre K à partir de la relation :

$$K = \frac{\rho o.S.L}{2.y}.\text{cnfcertif},$$

dans laquelle :

- $\rho o$ est la densité de l'air à 0 pied en atmosphère standard ;
- S est la surface de référence de la voilure ;
- L est la corde moyenne aérodynamique ; et
- y est le bras de levier du moteur.

Ainsi, grâce à l'invention, ledit procédé est particulièrement efficace et fiable. En effet, lorsque lesdites deuxième et/ou troisième relations sont obtenues avantageusement au moyen de régressions linéaires sur les mesures réalisées sur l'aéronef, en particulier :

- lesdites régressions linéaires présentent une bien meilleure qualité que celles du procédé connu précité, avec les mêmes mesures (points d'essai) ;
- lesdites droites de régression sont indépendantes du niveau de poussée de l'aéronef et sont plus robustes à la dynamique ou à une sélection moins rigoureuse des points d'essai.

On notera que les avantages précités du procédé conforme à l'invention par rapport aux procédures usuelles sont dus à une meilleure modélisation du comportement de l'aéronef (introduction du dérapage, suppression de l'angle de braquage $\delta n$). Schématiquement, on peut dire qu'avec les anciens procédés, on regardait le nuage des points d'essais sous l'angle le plus défavorable (Cy/Cnf) du point de vue de la modélisation, alors qu'avec le procédé conforme à l'invention, on identifie le plan dans lequel se situe ce nuage et on le projette dans un plan (Cy/$\beta$) où le nuage apparaît sous une forme très étirée, ce qui est favorable aux régressions linéaires. Du fait de la meilleure modélisation, on réduit la dispersion de la mesure.
Par conséquent, grâce à l'invention :

- on peut améliorer la sécurité lors des vols d'essai, c'est-à-dire lors des vols mis en oeuvre à l'étape a) précitée, puisque, les courbes de points d'essai ne dépendant plus de la dissymétrie de poussée, lesdits vols d'essai peuvent être réalisés, non plus avec un moteur coupé, mais simplement avec un moteur au ralenti ;
- on peut réduire le nombre de vols d'essai, en raison des caractéristiques suivantes : meilleure utilisation des points d'essai, sélection plus large, indépendance de la configuration, du niveau de poussée et de la masse de sorte qu'il n'est pas nécessaire de refaire les vols d'essai pour les différentes configurations et niveaux de poussée ;
- on peut réduire la durée de mise en oeuvre du procédé. La qualité des régressions linéaires permet en effet d'éliminer les nombreux bouclages et sélections très longs, qui existent avec le procédé connu ; et
- en raison de la fiabilité accrue du procédé conforme à l'invention, on réduit le risque de pénalités susceptibles d'être imposées par les services officiels pour une sous-estimation de la vitesse minimale de contrôle.

Par ailleurs, de façon avantageuse :

- ladite deuxième relation entre la force latérale Cy et le dérapage $\beta$ s'écrit :

$$Cy = Cy\beta.\beta + C,$$

dans laquelle $Cy\beta$ et C sont des coefficients déterminés à l'étape b1) à partir de mesures réalisées sur l'aéronef ; et/ou
- ladite troisième relation entre la force latérale Cy, le dérapage $\beta$ et le moment de lacet Cnf s'écrit :

$$Cy = A.Cnf + B.\beta,$$

dans laquelle A et B sont des coefficients déterminés à l'étape b3) à partir de mesures réalisées sur l'aéronef.

Les figures du dessin annexé feront bien comprendre comment l'invention peut être réalisée. Sur ces figures, des références identiques désignent des éléments semblables.

La figure 1 montre schématiquement un dispositif pour mettre en oeuvre le procédé conforme à l'invention.
La figure 2 illustre le schéma synoptique du procédé conforme à l'invention.

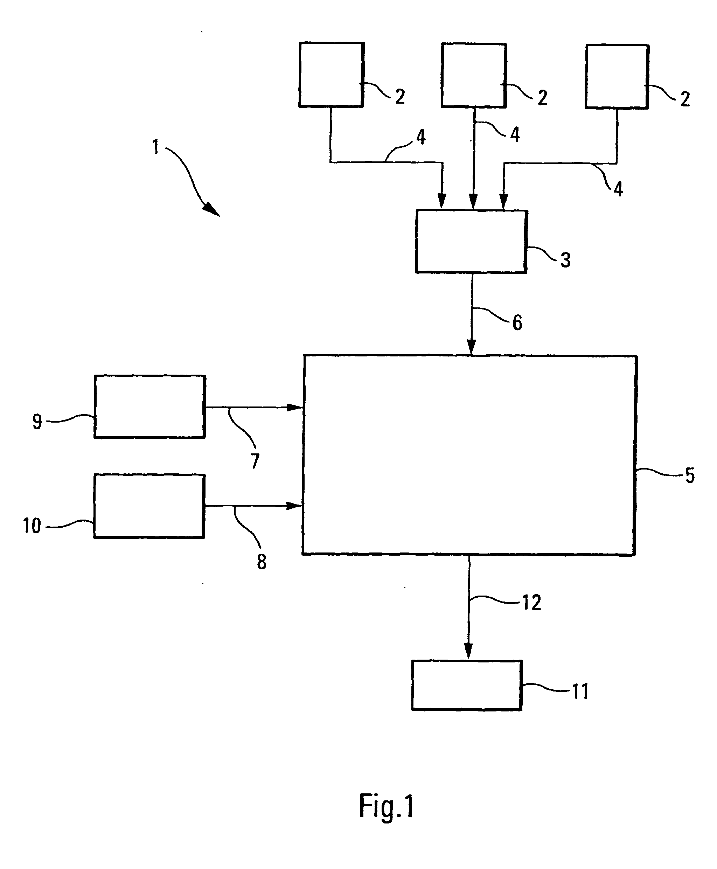

Le dispositif 1 conforme à l'invention et représenté schématiquement sur la figure 1 est destiné à déterminer sur un aéronef, notamment un avion de transport civil, non représenté et pourvu d'une pluralité de moteurs, une vitesse minimale de contrôle VMC avec au moins un moteur coupé (soit volontairement, soit suite à une panne).
A cet effet, ledit dispositif 1 comporte :

- une pluralité de capteurs 2 de type usuel, embarqués sur ledit aéronef et destinés à mesurer les valeurs de paramètres précisés ci-dessous, lors d'au moins un vol (dit vol d'essai) dudit aéronef ;
- au moins une mémoire 3 qui est également embarquée sur l'aéronef, qui est reliée par des liaisons 4 auxdits capteurs 2 et qui est destinée à enregistrer les valeurs mesurées par lesdits capteurs 2 ; et
- une unité de calcul 5 qui est reliée par l'intermédiaire de liaisons 6 à 8 respectivement à ladite mémoire 2 et à des mémoires 9 et 10 et qui détermine ladite vitesse VMC de la manière décrite ci-dessous à partir des mesures enregistrées dans la mémoire 3, ainsi que de valeurs de certification et de courbes de poussée PM1, PM2, PM3 des moteurs précisées ci-dessous et enregistrées respectivement dans lesdites mémoires 9 et 10. L'unité de calcul 5 qui est soit embarquée, soit installée au sol, peut transmettre la vitesse VMC calculée à un dispositif utilisateur 11, notamment à une unité de stockage, par une liaison 12.

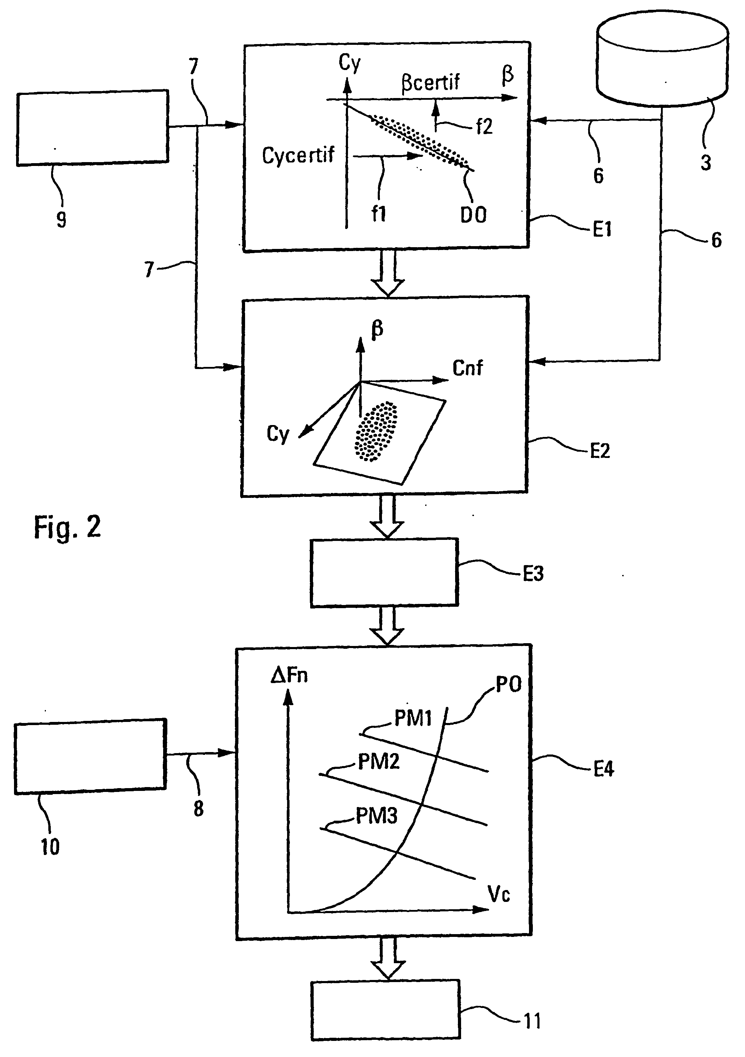

Le procédé mis en oeuvre par ce dispositif 1 présente, en plus d'une étape préliminaire, pendant laquelle au cours au moins d'un vol d'essai on mesure sur l'aéronef les valeurs de paramètres qui sont enregistrées dans la mémoire 3, des étapes E1 à E4 représentées sur la figure 2, dans lesquelles :

I) dans les étapes E1 et E2, à partir desdites mesures reçues de la mémoire 3 et de la valeur de certification prédéfinie et reçue de la mémoire 9, on détermine une valeur de certification Cnfcertif du moment de lacet cnf créé par la coupure du moteur ;
II) dans l'étape E3, à partir de ladite valeur Cnfcertif, on calcule la valeur d'un paramètre K permettant de former une première relation R1 :

$$\Delta\text{fn} = \text{K.Vc}^2,$$

dans laquelle :

- $\Delta$fn illustre la dissymétrie de poussée due à la coupure du moteur ; et
- Vc représente la vitesse de l'aéronef ; et

III) dans l'étape E4, à partir de ladite première relation représentée par une courbe P0 sur la figure 2 et de courbes de poussée PM1, PM2, PM3 des moteurs, on détermine de façon usuelle ladite vitesse minimale de contrôle VMC. Pour ce faire, lesdites courbes de poussée de type usuel, qui sont enregistrées dans la mémoire 10 sont généralement fournies par le motoriste.

Selon l'invention, à ladite étape E1 :

- en premier lieu, à partir des valeurs mesurées simultanément, respectivement du dérapage β et de la force latérale Cy, qui sont reçues de la mémoire 3, on déduit une deuxième relation R2 précisée ci-dessous entre ledit dérapage β et ladite force latérale Cy. A cet effet, on détermine par une régression linéaire usuelle sur les points de mesure une droite de régression DO entre le dérapage β et la force latérale Cy ; et
- en second lieu, à partir de ladite deuxième relation R2 et donc de la droite de régression DO, ainsi que d'une valeur de certification Cycertif de ladite force latérale Cy reçue de la mémoire 9, on détermine une valeur de certification βcertif correspondante du dérapage β, comme illustré par des flèches f1 et f2 sur la figure 2.

De plus, selon l'invention, à ladite étape E2 :

- en premier lieu, à partir de valeurs mesurées simultanément, respectivement dudit dérapage β, de ladite force latérale Cy et dudit moment de lacet Cnf, qui sont reçues de la mémoire 3, on déduit une troisième relation R3 entre ledit dérapage β, ladite force latérale Cy et ledit moment de lacet Cnf. On utilise également à cet effet une régression linéaire usuelle ; et

- en second lieu, à partir de ladite troisième relation R3 et desdites valeurs de certification Cycertif et βcertif, on détermine ladite valeur de certification Cnfcertif qui est utilisée à l'étape E3 précitée.

Ainsi, grâce à l'invention, ledit procédé et ledit dispositif 1 sont particulièrement efficaces et fiables.
De plus, grâce à l'invention :

- les régressions linéaires précitées présentent une bien meilleure qualité que celles du procédé connu indiqué précédemment, avec les mêmes mesures ou points d'essai ;
- les droites de régression obtenues par lesdites régressions linéaires conformes à l'invention sont indépendantes de la configuration de l'aéronef (volets, train) ; et de plus
- lesdites droites de régression sont indépendantes du niveau de poussée de l'aéronef et sont plus robustes à la dynamique ou à une sélection moins rigoureuse des points d'essai.

Par conséquent, grâce à l'invention :

- on peut améliorer la sécurité lors des vols d'essai, c'est-à-dire lors des vols mis en oeuvre à l'étape préliminaire précitée, puisque, les courbes de points d'essai ne dépendant plus de la dissymétrie de poussée, lesdits vols d'essai peuvent être réalisés, non plus avec un moteur coupé, mais simplement avec un moteur au ralenti ;
- on peut réduire le nombre de vols d'essai, en raison des caractéristiques suivantes : meilleure utilisation des points d'essai, sélection plus large, indépendance de la configuration, du niveau de poussée et de la masse de sorte qu'il n'est pas nécessaire de refaire les vols d'essai pour les différentes configurations et niveaux de poussée ;
- on peut réduire la durée de mise en oeuvre du procédé. La qualité des régressions linéaires permet en effet d'éliminer les nombreux bouclages et sélections très longs, qui existent avec le procédé connu ; et
- en raison de la fiabilité accrue du procédé conforme à l'invention, on réduit le risque de pénalités susceptibles d'être imposées par les services officiels pour une sous-estimation de la vitesse minimale de contrôle.

Par ailleurs, selon l'invention :

- ladite deuxième relation R2 entre la force latérale Cy et le dérapage β s'écrit :

$$Cy = Cy\beta . \beta + C,$$

dans laquelle $Cy\beta$ et C sont des coefficients déterminés à l'étape E1 à partir de mesures réalisées sur l'aéronef, au moyen de la régression linéaire précitée ;
- ladite troisième relation R3 entre la force latérale Cy, le dérapage β et le moment de lacet Cnf s'écrit :

$$Cy = A.Cnf + B.\beta,$$

dans laquelle A et B sont des coefficients déterminés à l'étape E2 à partir de mesures réalisées sur l'aéronef, au moyen de la régression linéaire précitée ; et
- à l'étape E3, concernant ladite première relation R1, on calcule le paramètre K à partir de l'expression:

$$K = \frac{\rho o.S.L}{2.y} . cnfcertif,$$

dans laquelle :

- $\rho o$ est la densité de l'air à 0 pied en atmosphère standard ;
- S est la surface de référence de la voilure ;
- L est la corde moyenne aérodynamique ; et
- y est le bras de levier du moteur.

On démontrera ci-après les relations R1, R2 et R3 précitées conformes à l'invention.
A cet effet, on utilisera les paramètres suivants :

Vs1g :      la vitesse de décrochage à 1 g

KVs1g :     le rapport entre Vs1g et la vitesse minimale de contrôle VMC (déterminé par la réglementation)

Ny :      l'accélération latérale

$\Delta$Fn :     la dissymétrie de poussée

$\beta$ :     l'angle de dérapage

$\Phi$ :     l'angle de roulis

Vc :     la vitesse de l'aéronef

$\delta$l :     l'angle de braquage de la commande de gauchissement

$\delta$n:     l'angle de braquage de la gouverne de direction

$\rho$o :     la densité de l'air à 0 pied en atmosphère standard

m :     la masse de l'aéronef

g :     l'accélération de la pesanteur

S :     la surface de référence de la voilure

y :     le bras de levier du moteur (c'est-à-dire la distance entre l'axe de poussée du moteur et le plan de symétrie de l'aéronef)

L :     la longueur de référence (à savoir la corde moyenne aérodynamique)

Cz :     le coefficient de portance

Cnf :     le moment de lacet créé par la coupure du moteur

Cy$\beta$ :     la dérivée du coefficient de force latérale par rapport à $\beta$

Cy$\delta$n :     la dérivée du coefficient de force latérale par rapport à $\delta$n

Cy$\delta$l :     la dérivée du coefficient de force latérale par rapport à $\delta$l

Cl$\beta$ :     la dérivée du coefficient de moment de roulis par rapport à $\beta$

Cl$\delta$n :     la dérivée du coefficient de moment de roulis par rapport à $\delta$n

Cl$\delta$l :     la dérivée du coefficient de moment de roulis par rapport à $\delta$l

Cn$\beta$ :     la dérivée du coefficient de moment de lacet par rapport à $\beta$

Cn$\delta$n :     la dérivée du coefficient de moment de lacet par rapport à $\delta$n

Cn$\delta$l :     la dérivée du coefficient de moment de lacet par rapport à $\delta$l.

Premièrement, concernant la relation R3, on va démontrer que :

$$Cy = A.Cnf + B.\beta$$

avec

$$\begin{cases} Cy = -\dfrac{2.m.g.Ny}{\rho o.S.Vc^2} \\[2mm] Cnf = \dfrac{2.\Delta Fn.y}{\rho o.S.L.Vc^2} \end{cases}$$

A cet effet, à partir des équations :

- de force latérale :

$$\frac{1}{2}.\rho o.S.Vc^2(Cy\beta.\beta + Cy\delta n.\delta n + Cy\delta l.\delta l) + m.g.Ny = 0 \ ;$$

- de moment de roulis :

$$Cl\beta.\beta + Cl\delta n.\delta n + Cl\delta l.\delta l = 0 \ ;$$

et
- de moment de lacet :

$$\frac{1}{2}\rho o.S.L.Vc^2(Cn\beta.\beta + Cn\delta n.\delta n + Cn\delta l.\delta l) = \Delta Fn.y,$$

on obtient le système suivant :

$$\begin{pmatrix} Cy\beta & Cy\delta n & Cy\delta l \\ Cl\beta & Cl\delta n & Cl\delta l \\ Cn\beta & Cn\delta n & Cn\delta l \end{pmatrix} * \begin{pmatrix} \beta \\ \delta n \\ \delta l \end{pmatrix} = \begin{pmatrix} -\dfrac{2.m.g.Ny}{\rho o.S.Vc^2} \\ 0 \\ \dfrac{2.\Delta Fn.y}{\rho o.S.L.Vc^2} \end{pmatrix} = \begin{pmatrix} Cy \\ 0 \\ Cnf \end{pmatrix}$$

On résout ce système à trois équations et à trois inconnues selon la méthode dite de Cramer. Le déterminant dudit système s'écrit :

$$\Delta = \begin{vmatrix} Cy\beta & Cy\delta n & Cy\delta l \\ Cl\beta & Cl\delta n & Cl\delta l \\ Cn\beta & Cn\delta n & Cn\delta l \end{vmatrix} \neq 0$$

Le déterminant réduit s'écrit :

$$\beta = \frac{1}{\Delta} * \begin{vmatrix} -Ny.Cz & Cy\delta n & Cy\delta l \\ 0 & Cl\delta n & Cl\delta l \\ Cnf & Cn\delta n & Cn\delta l \end{vmatrix}$$

soit

$$(a) \quad \Delta.\beta = -Ny.Cz.(Cl\delta n.Cn\delta l - Cl\delta l.Cn\delta n) + Cnf.(Cy\delta n.Cl\delta l - Cy\delta l.Cl\delta n)$$

$$\frac{Ny.Cz}{\beta} = \frac{Cnf}{\beta}.\left(\frac{(Cy\delta l.Cl\delta n - Cy\delta n.Cl\delta l)}{(Cl\delta l.Cn\delta n - Cl\delta n.Cn\delta l)}\right) + \left(\frac{\Delta}{(Cl\delta l.Cn\delta n - Cl\delta n.Cn\delta l)}\right)$$

que l'on peut écrire :

$$Cy = A.Cnf + B.\beta$$

avec

$$\begin{cases} A = \left(\dfrac{(Cy\delta l.Cl\delta n - Cy\delta n.Cl\delta l)}{(Cl\delta l.Cn\delta n - Cl\delta n.Cn\delta l)}\right) \\ B = \left(\dfrac{\Delta}{(Cl\delta l.Cn\delta n - Cl\delta n.Cn\delta l)}\right) \end{cases}$$

On rappellera que, par une régression sur les points d'essai, on obtient lesdits coefficients A et B.

Deuxièmement, on démontre la relation R2.

De façon connue, l'équilibre latéral de l'aéronef s'écrit :

$$(b) \quad \frac{1}{2}.\rho o.S.Vc^2(Cy\beta.\beta + Cy\delta n.\delta n + Cy\delta l.\delta l) + m.g.Ny = 0$$

L'expression (b) peut aussi s'écrire :

$$(c) \quad -Cy\beta.\beta - Cy\delta n.\delta n - Cy\delta l.\delta l = \frac{mg.Ny}{\frac{1}{2}1.\rho o.S.Vc^2} = -Cy$$

Etant proche de l'équilibre, on pose $Cy\delta n.\delta n + Cy\delta l.\delta l = C$, l'expression (c) s'écrit alors :

$$(R2) \quad Cy\beta.\beta + C = Cy.$$

Par une régression linéaire sur les points d'essai, on obtient les coefficients $Cy\beta$ et C de cette relation R2.

Troisièmement, concernant la relation R1, on sait que la relation R3 précitée peut aussi s'écrire :

$$(d) \quad Cnf = \frac{\Delta Fn.y}{\frac{1}{2}.\rho o.S.L.Vc^2} = \frac{1}{A}.(Cy - B.\beta)$$

Pour en déduire la capacité aérodynamique, on se place aux conditions de certification, c'est-à-dire :

$$(e) \quad Nycertif = 0,087 = \sin(\Phi=5°)$$

$$\text{(f)} \qquad \text{mcertif.g} = \frac{1}{2}.\rho o.S.Czmax. \frac{Vc^2}{KVs1g^2}$$

d'où :

$$\text{(g)} \qquad \text{Cycertif} = \frac{\text{Nycertif.Czmax}}{KVs1g^2}$$

Lesdites expressions (d), (e) et (g) permettent de déterminer l'angle β correspondant à ces conditions de certification :

$$\text{(h)} \qquad \beta\text{certif} = \frac{\text{Cycertif - C.KVs1g}^2}{\text{Cy}\beta.KVs1g^2}$$

D'où la capacité aérodynamique [à partir des expressions (d), (e), (f), (g) et (h)] :

$$\Delta Fn = \frac{\frac{1}{2}.\rho o.S.L.Vc^2}{y.A}.(\text{Cycertif - B.}\beta\text{certif})$$

soit

$$\Delta Fn = \frac{\frac{1}{2}.\rho o.S.L.Vc^2}{y.A} . \left( \text{Cycertif} - B.\frac{\text{Cycertif} - C.KVs1g^2}{Cy\beta.KVs1g^2} \right)$$

On obtient ainsi la relation R1 :

$$\Delta Fn = K.Vc^2$$

avec

$$\begin{cases} K = \dfrac{\frac{1}{2}.\rho o.S.L}{y.A} . \left( \text{Cycertif} - B.\dfrac{\text{Cycertif} - C.KVs1g^2}{Cy\beta.KVs1g^2} \right) \\ \text{ou} \\ K = \dfrac{\rho o.S.L}{2.y}.\text{cnfcertif} \end{cases}$$

**Revendications**

1. Procédé pour déterminer sur un aéronef pourvu d'une pluralité de moteurs une vitesse minimale de contrôle avec au moins un moteur coupé, procédé selon lequel :

a) au cours au moins d'un vol dudit aéronef, on mesure sur ledit aéronef les valeurs du dérapage β, de la force latérale Cy et du moment de lacet Cnf;

b) à partir desdites mesures et d'au moins une valeur de certification prédéfinie, on détermine une valeur de certification Cnfcertif du moment de lacet cnf créé par la coupure du moteur ;

c) à partir de ladite valeur de certification Cnfcertif, on calcule la valeur d'un paramètre K permettant de former une première relation

$$\Delta fn = K.Vc^2,$$

dans laquelle :

- $\Delta fn$ illustre la dissymétrie de poussée due à la coupure du moteur ; et
- Vc représente la vitesse de l'aéronef ; et

d) à partir de ladite première relation et de courbes de poussée des moteurs, on détermine ladite vitesse minimale de contrôle,

**caractérisé en ce que** :

- à ladite étape b) :

    b1) à partir de valeurs mesurées simultanément, respectivement du dérapage β et de la force latérale Cy, on déduit une deuxième relation entre ledit dérapage β et ladite force latérale Cy ;
    b2) à partir de ladite deuxième relation et d'une valeur de certification Cycertif de ladite force latérale Cy, on détermine une valeur de certification βcertif correspondante du dérapage β ;
    b3) à partir des valeurs mesurées simultanément, respectivement dudit dérapage β, de ladite force latérale Cy et dudit moment de lacet Cnf, on déduit une troisième relation entre ledit dérapage β, ladite force latérale Cy et ledit moment de lacet Cnf ; et
    b4) à partir de ladite troisième relation et desdites valeurs de certification Cycertif et βcertif, on détermine ladite valeur de certification Cnfcertif ; et

- à ladite étape c), on calcule ledit paramètre K à partir de la relation :

$$K = \frac{\rho o.SL}{2.y}.cnfcertif,$$

dans laquelle :

- ρo est la densité de l'air à 0 pied en atmosphère standard ;
- S est la surface de référence de la voilure de l'aéronef ;
- L est la corde moyenne aérodynamique ; et
- y est le bras de levier du moteur.

2. Procédé selon la revendication 1,
   **caractérisé en ce que** ladite deuxième relation entre la force latérale Cy et le dérapage β s'écrit :

$$Cy = Cy\beta.\beta + C,$$

dans laquelle Cyβ et C sont des coefficients déterminés à l'étape b1) à partir de mesures réalisées sur l'aéronef.

3. Procédé selon l'une des revendications 1 et 2,
   **caractérisé en ce que** ladite troisième relation entre la force latérale Cy, le dérapage β et le moment de lacet Cnf s'écrit :

$$Cy = A.Cnf + B.\beta,$$

dans laquelle A et B sont des coefficients déterminés à l'étape b3) à partir de mesures réalisées sur l'aéronef.

**4.** Procédé selon l'une quelconque des revendications 1 à 3,
**caractérisé en ce qu'**à l'étape b1), on déduit ladite deuxième relation au moyen d'une régression linéaire sur les mesures réalisées sur l'aéronef.

**5.** Procédé selon l'une quelconque des revendications 1 à 4,
**caractérisé en ce qu'**à l'étape b3), on déduit ladite troisième relation au moyen d'une régression linéaire sur les mesures réalisées sur l'aéronef.


**Patentansprüche**

**1.** Verfahren zur Bestimmung einer Mindeststeuergeschwindigkeit eines mehrmotorigen Flugzeuges bei Ausfall von mindestens einem Motor, demgemäß:

a) man während mindestens eines Fluges des Flugzeuges die Werte des Schiebewinkels $\beta$, der Querkraft Cy und des Giermoments Cnf misst;
b) man anhand der Messergebnisse und mindestens eines vordefinierten Zulassungswertes einen Zulassungswert Cnfcertif des Giermoments cnf bestimmt, das durch das Ausschalten des Motors erzeugt wird;
c) man anhand des Zulassungswertes Cnfcertif den Wert eines Parameters K berechnet, der es erlaubt, eine erste Beziehung

$$\Delta fn = K.Vc^2$$

zu bilden, in der:

- $\Delta$fn die Asymmetrie des Schubs darstellt, die durch das Ausschalten des Motors bedingt ist; und
- Vc die Geschwindigkeit des Flugzeuges darstellt; und

d) man anhand der ersten Beziehung und Schubkurven der Motoren die Mindeststeuergeschwindigkeit bestimmt,

wobei man:

- in Schritt b):

 b1) anhand von gleichzeitig gemessenen Werten des Schiebewinkels $\beta$ beziehungsweise der Querkraft Cy eine zweite Beziehung zwischen dem Schiebewinkel $\beta$ und der Querkraft Cy herleitet;
 b2) anhand der zweiten Beziehung und eines Zulassungswertes Cycertif der Querkraft Cy einen entsprechenden Zulassungswert $\beta$certif des Schiebewinkels $\beta$ bestimmt;
 b3) anhand von gleichzeitig gemessenen Werten des Schiebewinkels $\beta$, der Querkraft Cy beziehungsweise des Giermoments Cnf eine dritte Beziehung zwischen dem Schiebewinkel $\beta$, der Querkraft Cy und dem Giermoment Cnf herleitet; und
 b4) anhand der dritten Beziehung und der Zulassungswerte Cycertif und $\beta$certif den Zulassungswert Cnfcertif bestimmt; und

- in Schritt c) anhand der Beziehung:

$$K = \frac{po.S.L}{2.y}.cnfcertif,$$

in der:

- po die Luftdichte in einer Höhe von 0 Fuß Standardatmosphäre ist;
- S die Referenzfläche des Tragwerkes des Flugzeuges ist;
- L die durchschnittliche aerodynamische Flügeltiefe ist; und
- y der Hebelarm des Motors ist

den Parameter K berechnet.

**2.** Verfahren nach Anspruch 1,
wobei die zweite Beziehung zwischen der Querkraft Cy und dem Schiebewinkel $\beta$ lautet:

$$Cy = Cy\beta.\beta + C,$$

wobei Cyß und C Koeffizienten sind, die in Schritt b1) anhand von am Flugzeug vorgenommenen Messungen bestimmt wurden.

**3.** Verfahren nach einem der Ansprüche 1 und 2,
wobei die dritte Beziehung zwischen der Querkraft Cy, dem Schiebewinkel $\beta$ und dem Giermoment Cnf lautet:

$$Cy = A.Cnf + B.\beta,$$

wobei A und B Koeffizienten sind, die in Schritt b3) anhand von am. Flugzeug vorgenommenen Messungen bestimmt wurden.

**4.** Verfahren nach einem der Ansprüche 1 bis 3,
wobei man in Schritt b1) die zweite Beziehung mit Hilfe einer linearen Regression der am Flugzeug ausgeführten Messungen herleitet.

**5.** Verfahren nach einem der Ansprüche 1 bis 4,
wobei man in Schritt b3) die dritte Beziehung mit Hilfe einer linearen Regression der am Flugzeug ausgeführten Messungen herleitet.

**Claims**

**1.** Method for determining, on an aircraft equipped with a number of engines, a minimum control speed with at least one engine shut down, according to which method:

a) during at least one flight of said aircraft, the values of the sideslip $\beta$, the lateral force Cy and the yaw moment Cnf are measured on said aircraft;
b) on the basis of said measurements and of at least one predefined certification value, a certification value Cnfcertif for the yaw moment cnf created by the shutting down of the engine is determined;
c) on the basis of said certification value Cnfcertif, the value of a parameter K is calculated to allow the forming of a first relationship

$$\Delta fn = K.\ Vc^2,$$

in which:

- $\Delta fn$ illustrates the asymmetry of thrust due to the shutting down of the engine; and
- Vc represents the speed of the aircraft; and

d) on the basis of said first relationship and of engine thrust curves, said minimum control speed is determined,

**characterized in that**:

- in said step b):

    b1) on the basis of simultaneously measured values of, respectively, the sideslip β and the lateral force Cy, a second relationship between said sideslip β and said lateral force Cy is deduced;
    b2) on the basis of said second relationship and of a certification value Cycertif of said lateral force Cy, a corresponding certification value βcertif is determined for the sideslip p;
    b3) on the basis of the simultaneously measured values of, respectively, said sideslip β, said lateral force Cy and said yaw moment Cnf, a third relationship between said sideslip β, said lateral force Cy and said yaw moment Cnf is deduced; and
    b4) on the basis of said third relationship and of said certification values Cycertif and βcertif, said certification value Cnfcertif is determined; and

- in said step c), the parameter K is calculated from the relationship:

$$K = \frac{\rho o.S.L}{2.y}.cnfcertif$$

in which:

- ρo is the density of air at 0 feet in standard atmosphere;
- S is the reference area of the wing structure;
- L is the mean aerodynamic chord; and
- y is the lever arm of the engine.

2. Method according to Claim 1,
**characterized in that** said second relationship between the lateral force Cy and the sideslip β can be written:

$$Cy = cy\beta.\beta + C,$$

in which Cyβ and C are coefficients determined in step b1) on the basis of measurements made on the aircraft.

3. Method according to either of Claims 1 and 2,
**characterized in that** said third relationship between the lateral force Cy, the sideslip β and the yaw moment Cnf can be written:

$$Cy = A.Cnf + B.\beta,$$

in which A and B are coefficients determined in step b3) on the basis of measurements made on the aircraft.

4. Method according to any one of Claims 1 to 3,
**characterized in that**, in step b1), said second relationship is deduced using linear regression over the measurements made on the aircraft.

5. Method according to any one of Claims 1 to 4,
**characterized in that**, in step b3), said third relationship is deduced using linear regression over the measurements made on the aircraft.

Fig.1

Fig. 2